# EUROPEAN PATENT SPECIFICATION

(11) **EP 4 198 069 B1**
(45) Date of publication and mention of the grant of the patent: **04.03.2026**
(21) Application number: 22865934.8
(22) Date of filing: 07.04.2022
(51) Int. Cl.: C08G 18/76, C08G 18/38, C08G 18/71, G02B 1/04, C08G 18/24, C08K 5/00, C08K 5/521

(54) **XYLYLENE DIISOCYANATE COMPOSITION, POLYMERIZABLE COMPOSITON, RESIN, MOLDED BODY, OPTICAL ELEMENT, AND LENS**
XYLYLENDIISOCYANATZUSAMMENSETZUNG, POLYMERISIERBARE ZUSAMMENSETZUNG, HARZ, FORMKÖRPER, OPTISCHES ELEMENT UND LINSE
COMPOSITION DE DIISOCYANATE DE XYLYLÈNE, COMPOSITION POLYMÉRISABLE, RÉSINE, CORPS MOULÉ, ÉLÉMENT OPTIQUE ET LENTILLE

(30) Priority: 09.09.2021 JP 2021147170
(43) Date of publication of application: 21.06.2023
(60) Divisional application: 26153452.3
(73) Proprietor: Mitsui Chemicals, Inc., Tokyo 104-0028 (JP)
(72) Inventor: TAKAGUCHI, Masayuki, Omuta-shi, Fukuoka 836-8610 (JP)
(74) Representative: Mewburn Ellis LLP
(86) International application number: PCT/JP2022/017306
(87) International publication number: WO 2023/037645

(56) References cited:
- WO-A1-2017/179575
- WO-A1-2018/190290
- CN-A- 111 363 114
- GB-A- 1 254 690
- JP-A- 2000 119 590
- KR-A- 20170 093 028
- US-A1- 2012 115 998
- US-A1- 2019 292 304

## Description

### TECHNICAL FIELD

The present invention relates to a xylylene diisocyanate composition, a polymerizable composition, a resin, a molded article, an optical element, and a lens.

### BACKGROUND ART

Conventionally, a xylylene diisocyanate composition has been known as a raw material of a resin used for various industrial products.

For example, a xylylene diisocyanate composition has been proposed in which a xylylene diisocyanate and a dichloromethylbenzyl isocyanate are contained and a content ratio of the dichloromethylbenzyl isocyanate is 0.6 ppm or more and 60 ppm or less (ref: for example, Patent Document 1). Furthermore, a xylylene diisocyanate composition has been proposed in which a xylylene diisocyanate and an acyl isocyanate are contained, where the acyl isocyanate is a stabilizer against unfavourable colouration (see Patent Document 2).

### Citation List

### Patent Document

Patent Document 1: International Patent Publication No. WO2018/190290
Patent Document 2: GB 1254690

### SUMMARY OF THE INVENTION

### PROBLEM TO BE SOLVED BY THE INVENTION

A resin produced from the xylylene diisocyanate composition described in Patent Document 1 may be required to improve hue and transparency in accordance with its purpose and application.

The present invention provides a xylylene diisocyanate composition, a polymerizable composition, a resin, a molded article, an optical element, and a lens capable of improving hue and transparency of a resin.

### MEANS FOR SOLVING THE PROBLEM

The present invention includes a xylylene diisocyanate composition for optical use including a xylylene diisocyanate and a 4-methylbenzenesulfonyl isocyanate, wherein a ratio of the 4-methylbenzenesulfonyl isocyanate in the xylylene diisocyanate composition is, on a mass basis, 100 ppm or less.

The present invention includes the xylylene diisocyanate composition of the above-described, wherein a ratio of the 4-methylbenzenesulfonyl isocyanate in the xylylene diisocyanate composition is, on a mass basis, 1 ppm or more.

The present invention includes the xylylene diisocyanate composition of the above-described, wherein a ratio of the 4-methylbenzenesulfonyl isocyanate in the xylylene diisocyanate composition is, on a mass basis, 20 ppm or more.

The present invention includes a polymerizable composition containing any one of the xylylene diisocyanate compositions of the above-described and an active hydrogen group-containing component.

The present invention includes the polymerizable composition of the above-described, wherein the active hydrogen group-containing component contains a polythiol.

The present invention includes the polymerizable composition of the above-described, wherein the polythiol is at least one kind selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).

The present invention includes a resin being a cured product of any one of the polymerizable compositions of the above-described.

The present invention includes a molded article made of the resin of the above-described.

The present invention includes an optical element being the molded article of the above-described.

The present invention includes a lens being the optical element of the above-described.

### EFFECT OF THE INVENTION

The xylylene diisocyanate composition of the present invention contains a 4-methylbenzenesulfonyl isocyanate, wherein a ratio of the 4-methylbenzenesulfonyl isocyanate in the xylylene diisocyanate composition is, on a mass basis, 100 ppm or less. Therefore, a resin produced from the above-described xylylene diisocyanate composition has excellent hue and excellent transparency.

The polymerizable composition of the present invention contains the above-described xylylene diisocyanate composition. Therefore, the resin produced from the above-described polymerizable composition has the excellent hue and the excellent transparency.

The resin of the present invention is a cured product of the above-described polymerizable composition. Therefore, the resin has the excellent hue and the excellent transparency.

The molded article of the present invention is made of the above-described resin. Therefore, the molded article has the excellent hue and the excellent transparency.

The optical element of the present invention is the above-described molded article. Therefore, the optical element has the excellent hue and the excellent transparency.

The lens of the present invention is the above-described optical element. Therefore, the lens has the excellent hue and the excellent transparency.

### DESCRIPTION OF EMBODIMENTS

### 1. Xylylene Diisocyanate Composition

A xylylene diisocyanate composition (XDI composition) contains a xylylene diisocyanate (XDI) as a main component.

Examples of the XDI include 1,2-XDI (o-XDI), 1,3-XDI (m-XDI), and 1,4-XDI (p-XDI).

One or two or more kinds of XDIs may be included in the XDI composition.

As the XDI, preferably, 1,3-XDI (m-XDI) is used.

A content ratio (purity) of the XDI is, for example, 98.00% by mass or more, preferably 99.00% by mass or more, more preferably 99.30% by mass or more, further more preferably 99.60% by mass or more, and for example, 99.95% by mass or less with respect to the total mass of the XDI composition. That is, the XDI composition consists of almost exclusively the XDI. The content ratio of the XDI can be measured by the method described in the [0377] paragraph of International Patent Publication No. WO2018/190290.

The XDI composition contains a 4-methylbenzenesulfonyl isocyanate (PTSI, also known as p-toluenesulfonyl isocyanate) as a secondary component.

A ratio of the PTSI in the XDI composition is, on a mass basis, 100 ppm or less.

When the ratio of the PTSI in the XDI composition is the above-described upper limit value or less, it is possible to improve hue and transparency of a resin produced from the XDI composition.

The hue can be evaluated by a yellow index described in Examples to be described later. The transparency can be evaluated by a degree of devitrification described in Examples to be described later.

In addition, the ratio of the PTSI in the XDI composition is, on a mass basis, for example, above 0 ppm, preferably 1 ppm or more, more preferably 5 ppm or more, more preferably 10 ppm or more, further more preferably 20 ppm or more, further more preferably 40 ppm or more.

When the content ratio of the PTSI is the above-described lower limit value or more, it is possible to improve the hue and the transparency of the resin produced from the XDI composition.

It is also possible to set a range of the content ratio of the PTSI by appropriately using the upper limit value and the lower limit value of the content ratio of the PTSI described above in combination.

In order to measure the content ratio of the PTSI, first, 100 mg of XDI composition containing the PTSI and 0.5 mg of methylnaphthalene as an internal standard material are mixed, and the obtained mixture is fixed in 10 mL, thereby obtaining a sample. Next, the obtained sample is subjected to gas chromatography mass spectrometry under the following measurement conditions. The content ratio of the PTSI is calculated from an area ratio of a peak of the internal standard material appearing at the retention time of 12.1 minutes to the peak of the PTSI appearing at the retention time of 13.2 minutes to 13.9 minutes.

### (Measurement Conditions of Gas Chromatography Mass Spectrometry)

Column: HP19091L-433, HP-50+ (inner diameter of 0.25 mm× length of 30 m, film of 0.25 µm)
Oven temperature: retained at 50°C for 1 minute, temperature rising at 10.0°C/min from 50°C to 280°C, retained for 6 minutes after reaching 280°C
Carrier gas: He 1.0 ml/min, constant flow mode
Injection method: pulsed splitless method (150 kPa at 0.5 min)
Injection amount: 1.0 µL
Sample concentration: 1.0% by mass of dichloromethane solution
Injection temperature: 200°C
Interface temperature: 280°C
Quadrupole temperature: 150°C
Ion source temperature: 230°C
Detection method: Scan method (m/z: 10 to 500)

The XDI composition may contain another secondary component other than the PTSI.

Examples of the other secondary component include 4-methylbenzenesulfonamide (PTSA, also known as p-toluenesulfonamide), dichloromethylbenzyl diisocyanate (DCI) described in the [0028] to [0030] paragraphs of International Patent Publication No. WO2018/190290, and monochloromethylbenzyl isocyanate (CBI) described in the [0039] to [0041] paragraphs of International Patent Publication No. WO2018/190290.

The ratio of the PTSA in the XDI composition is, for example, 3000 ppm or less, preferably 2000 ppm or less.

When the content ratio of the PTSA is within the above-described range, it is possible to suppress yellowing and white turbidity of the resin produced from the XDI composition.

The ratio of the DCI in the XDI composition is, for example, 0.1 ppm or more, preferably 0.3 ppm or more, more preferably 0.6 ppm or more, more preferably 1.0 ppm or more, and for example, 60 ppm or less, preferably 50 ppm or less, more preferably 30 ppm or less, more preferably 20 ppm or less.

When the ratio of the DCI in the XDI composition is within the above-described range, it is possible to suppress the yellowing and the white turbidity of the resin produced from the XDI composition.

The ratio of the CBI in the XDI composition is, for example, 0.2 ppm or more, preferably 6 ppm or more, more preferably 100 ppm or more, and for example, 5000 ppm or less, preferably 4000 ppm or less, more preferably 3000 ppm or less, particularly preferably 1600 ppm or less, particularly preferably 1000 ppm or less.

Further, the content ratio of the CBI is, for example, 2 times or more, preferably 10 times or more, more preferably 20 times or more, and for example, 800 times or less, preferably 300 times or less, more preferably 50 times or less with respect to the content ratio of the DCI.

When the content ratio of the CBI is within the above-described range, it is possible to suppress the yellowing of the resin. In particular, when the content ratio of the CBI is the above-described upper limit or less, it is possible to suppress the yellowing of the resin, and it is also possible to smoothly progress a urethanization reaction during production of the resin, and reliably improve mechanical properties of the resin.

The content ratio of the DCI and the content ratio of the CBI can be measured by the method described in Examples of International Patent Publication No. WO2018/190290.

### 2. Method for Producing XDI Composition

Next, a method for producing an XDI composition is described.

The method for producing an XDI composition includes, for example, a step of producing a reaction mass (pre-purification composition), a step of purifying the reaction mass, and a step of adjusting the content ratio of the PTSI, by the method for producing an XDI composition described in the [0054] to [0110] paragraphs of International Patent Publication No. WO2018/190290.

In order to produce the reaction mass, for example, a xylylenediamine and a hydrogen chloride are mixed, thereby forming a xylylenediamine hydrochloride salt, and then, a hydrochloride salt and a carbonyl chloride (phosgene) are reacted (phosgenation method of an amine hydrochloride salt).

In the following, the xylylenediamine is referred to as an XDA. Examples of the XDA include 1,2-XDA (o-XDA), 1,3-XDA (m-XDA), and 1,4-XDA (p-XDA), and preferably, 1,3-XDA (m-XDA) is used.

In a salt formation step of forming an XDA hydrochloride salt, for example, the XDA and the hydrogen chloride are mixed in the presence of an inert solvent, thereby producing (salt forming) the XDA hydrochloride salt.

An example of the inert solvent includes the inert solvent described in the [0059] paragraph of International Patent Publication No. WO2018/190290. These inert solvents may be used alone or in combination of two or more. Of the inert solvents, preferably, halogenated aromatic hydrocarbons are used, more preferably, chlorobenzene and dichlorobenzene are used.

Then, a hydrogen chloride gas is supplied, while a solution in which the XDA is dissolved in the inert solvent is stirred, thereby mixing the hydrogen chloride gas into the solution.

A mass ratio (total amine concentration) of the XDA to the total sum of the mass of the XDA and the inert solvent is, for example, 3% by mass or more, preferably 5% by mass or more, and for example, 30% by mass or less, preferably 20% by mass or less, more preferably 15% by mass or less.

A supply ratio of the hydrogen chloride is, for example, 2 mol or more, and for example, 10 mol or less, preferably 6 mol or less, more preferably 4 mol or less with respect to 1 mol of XDA.

A salt formation temperature in the salt formation step is, for example, 30°C or more, preferably 50°C or more, and for example, 160°C or less, preferably 150°C or less. A salt formation pressure (gauge pressure) in the salt formation step is, for example, the atmospheric pressure (0 MPaG) or more, preferably 0.01 MPaG or more, and for example, 1.0 MPaG or less, preferably 0.5 MPaG or less.

Thus, the XDA hydrochloride salt is generated from the XDA and the hydrogen chloride (hydrochlorination reaction), thereby producing a slurry containing the XDA hydrochloride salt.

Next, a carbonyl dichloride is supplied to the slurry containing the XDA hydrochloride salt to react the XDA hydrochloride salt with the carbonyl dichloride (isocyanate-formation reaction, phosgenation), while the hydrogen chloride gas which is secondarily produced is removed.

The supply ratio of the carbonyl dichloride is, for example, 4 mol or more, preferably 5 mol or more, more preferably 6 mol or more, and for example, 50 mol or less, preferably 40 mol or less, more preferably 30 mol or less with respect to 1 mol of XDA hydrochloride salt.

Reaction time of the isocyanate-formation step is, for example, 4 hours or more, preferably 6 hours or more, and for example, 25 hours or less, preferably 20 hours or less, more preferably 15 hours or less.

A reaction temperature in the isocyanate-formation step is, for example, 90°C or more, preferably 100°C or more, more preferably 110°C or more, and for example, 190°C or less, preferably 180°C or less, more preferably 160°C or less.

A reaction pressure (gauge pressure) in the isocyanate-formation step is, for example, above the atmospheric pressure (0 MPaG), preferably 0.0005 MPaG or more, more preferably 0.001 MPaG or more, further more preferably 0.003 MPaG or more, particularly preferably 0.01 MPaG (10 kPaG) or more, especially preferably 0.02 MPaG (20 kPaG) or more, most preferably 0.03 MPaG (30 kPaG) or more, and for example, 0.6 MPaG or less, preferably 0.4 MPaG or less, more preferably 0.2 MPaG or less.

The isocyanate-formation step is preferably carried out by a continuous method. In other words, a slurry (XDA hydrochloride salt) generated in a stirring tank is continuously fed from the stirring tank into a reaction tank which is different from the stirring tank, and a reaction solution (reaction mass) is continuously taken out from the reaction tank, while the XDA hydrochloride salt and the carbonyl dichloride are reacted in the reaction tank.

Thus, the XDA hydrochloride salt and the carbonyl dichloride react, thereby generating the XDI as a main component.

Then, if necessary, a degassing step, a desolvation step, and a detarring step are carried out with respect to a reaction solution (reaction mixture). In the degassing step, a gas such as the excessive carbonyl chloride and the hydrogen chloride which is secondarily produced is removed from the reaction solution (reaction mixture) with a known degassing column. In the desolvation step, an inert solvent is distilled off from the reaction solution with a known distillation column. In the detarring step, a tar component is removed from the reaction solution with a known detarring device.

As described above, the reaction mass containing the XDI is produced.

The content ratio of the XDI in the reaction mass is, for example, 80.0% by mass or more, preferably 90.0% by mass or more, more preferably 95.0% by mass or more, and for example, 99.0% by mass or less, preferably 98.5% by mass or less, more preferably 98.0% by mass or less.

Next, the reaction mass is purified.

An example of a method for purifying the reaction mass includes distillation. In order to purify the reaction mass by the distillation, for example, a low boiling material (low boiling point component) is distilled off from the reaction mass by the distillation, and then, a low de-boiling mass which is a reaction mass after low de-boiling is rectified.

In the low de-boiling step, for example, the reaction mass is distilled with a low de-boiling column to distill off the low boiling material.

Examples of the low de-boiling column include shelf columns and filling columns, and preferably, filling columns are used. A theoretical plate number of the low de-boiling column is, for example, 3 plates or more, preferably 5 plates or more, more preferably 7 plates or more, and for example, 40 plates or less, preferably 20 plates or less, more preferably 15 plates or less.

A column bottom temperature of the low de-boiling column is, for example, 130°C or more, preferably 140°C or more, more preferably 150°C or more, and for example, 200°C or less, preferably 190°C or less, more preferably 180°C or less.

A column top temperature of the low de-boiling column is, for example, 90°C or more, preferably 100°C or more, more preferably 110°C or more, and for example, 160°C or less, preferably 150°C or less, more preferably 140°C or less.

A column top pressure of the low de-boiling column is, for example, 0.05 kPa or more, preferably 0.1 kPa or more, more preferably 0.2 kPa or more, and for example, 3.0 kPa or less, preferably 2.0 kPa or less, more preferably 1.0 kPa or less.

A column top reflux ratio of the low de-boiling column is, for example, 1 or more, preferably 5 or more, more preferably 10 or more, and for example, 80 or less, preferably 60 or less, more preferably 50 or less.

The retention time of the low de-boiling column is, for example, 0.1 hours or more, preferably 0.2 hours or more, more preferably 0.3 hours or more, and for example, 10 hours or less, preferably 5 hours or less, more preferably 3 hours or less.

Thus, the low boiling material is distilled off, thereby obtaining the low de-boiling mass as bottoms.

Then, in the rectification step, for example, the low de-boiling mass is distilled with a rectification column, and a fraction is taken out.

Examples of the rectification column include the shelf columns and the filling columns, and preferably, the filling columns are used. The theoretical plate number of the rectification column is, for example, 1 plate or more, and for example, 20 plates or less, preferably 10 plates or less, more preferably 5 plates or less.

The column bottom temperature of the rectification column is, for example, 120°C or more, preferably 130°C or more, more preferably 140°C or more, and for example, 190°C or less, preferably 180°C or less, more preferably 170°C or less.

The column top temperature of the rectification column is, for example, 90°C or more, preferably 110°C or more, more preferably 130°C or more, and for example, 180°C or less, preferably 170°C or less, more preferably 160°C or less.

The column top pressure of the rectification column is, for example, 0.05 kPa or more, preferably 0.1 kPa or more, more preferably 0.2 kPa or more, and for example, 3.0 kPa or less, preferably 2.0 kPa or less, more preferably 1.0 kPa or less.

The column top reflux ratio of the rectification column is, for example, 0.1 or more, preferably 0.2 or more, more preferably 0.3 or more, and for example, 50 or less, preferably 20 or less, more preferably 10 or less.

The retention time of the rectification column is, for example, 0.2 hours or more, preferably 0.5 hours or more, more preferably 1.0 hour or more, and for example, 20 hours or less, preferably 10 hours or less.

As described above, a fraction containing the XDI as a main component is taken out. The fraction which is taken out contains the DCI and the CBI within the above-described range.

Next, the content ratio of the PTSI is adjusted.

In order to adjust the content ratio of the PTSI, the PTSI is mixed into the taken-out fraction so that the content ratio of the PTSI is within the above-described range.

A method for adjusting the content ratio of the PTSI is not limited. When the PTSI is contained in the XDI composition, the content ratio of the PTSI may be adjusted, for example, by a known method such as distillation or column purification.

In addition, when the PTSA is blended into the XDI composition, the PTSA is mixed into the taken-out fraction so that the content ratio of the PTSA is within the above-described range.

Thus, the XDI composition is obtained.

### <Function and Effect>

The XDI composition of the present invention contains the PTSI.

Therefore, the resin which is produced from the XDI composition has the excellent hue and the excellent transparency.

When the ratio of the PTSI in the XDI composition is, on a mass basis, 100 ppm or less, it is possible to improve the hue and the transparency of the resin produced from the XDI composition.

### 3. Polymerizable Composition

The polymerizable composition contains an isocyanate component and an active hydrogen group-containing component. The isocyanate component contains the XDI composition. In other words, the polymerizable composition contains the XDI composition. Preferably, the isocyanate component consists of the XDI composition.

Examples of the active hydrogen group-containing component include polyol, polythiol, and polyamine.

These active hydrogen group-containing components may be used alone or in combination of two or more.

The active hydrogen group-containing component preferably contains a polythiol from the viewpoint of optical properties. More preferably, the active hydrogen group-containing components consists of the polythiol.

Examples of the polythiol include aliphatic polythiols, aromatic polythiols, and heterocyclic polythiols.

Examples of the aliphatic polythiol include methanedithiol, 1,2-ethanedithiol, 1,2,3-propanetrithiol, 1,2-cyclohexanedithiol, bis(2-mercaptoethyl)ether, tetrakis(mercaptomethyl)methane, diethylene glycol bis(2-mercaptoacetate), diethylene glycol bis(3-mercaptopropionate), ethylene glycol bis(2-mercaptoacetate), ethylene glycol bis(3-mercaptopropionate), trimethylolpropane tris(2-mercaptoacetate), trimethylolpropane tris(3-mercaptopropionate), trimethylolethane tris(2-mercaptoacetate), trimethylolethane tris(3-mercaptopropionate), pentaerythritol tetrakis(2-mercaptoacetate), pentaerythritol tetrakis(3-mercaptopropionate), bis(mercaptomethyl)sulfide, bis(mercaptomethyl)disulfide, bis(mercaptoethyl)sulfide, bis(mercaptoethyl)disulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, 2,5-dimercaptomethyl-1,4-dithiane, 2,5-dimercapto-1,4-dithiane, 2,5-dimercaptomethyl-2,5-dimethyl-1,4-dithiane, and esters of these thioglycolic acids and mercaptopropionic acids, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), thiodiglycol acid bis(2-mercaptoethyl ester), thiodipropionic acid bis(2-mercaptoethyl ester), dithiodiglycol acid bis(2-mercaptoethyl ester), dithiodipropionic acid bis(2-mercaptoethyl ester), 1,1,3,3-tetrakis(mercaptomethylthio)propane, 1,1,2,2-tetrakis(mercaptomethylthio)ethane, 4,6-bis(mercaptomethylthio)-1,3-dithiane, 2-(2,2-bis(mercaptomethylthio)ethyl)-1,3-dithiethane, 3-mercaptomethyl-1,5-dimercapto-2,4-dithiapentane, tris(mercaptomethylthio)methane, and tris(mercaptoethylthio)methane.

Examples of the aromatic polythiol include 1,2-dimercaptobenzene, 1,3-dimercaptobenzene, 1,4-dimethylcaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris(mercaptomethyleneoxy)benzene, 1,3,5-tris(mercaptoethyleneoxy)benzene, 2,5-toluenedithiol, 3,4-toluenedithiol, 1,5-naphthalenedithiol, and 2,6-naphthalenedithiol.

Examples of the heterocyclic polythiol include 2-methylamino-4,6-dithiol-sym-triazine, 3,4-thiophenedithiol, and bismuthiol.

These polythiols may be used alone or in combination of two or more.

As the polythiol, preferably, at least one kind selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1, 1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, tris(mercaptomethylthio)methane, ethylene glycol bis(3-mercaptopropionate), and diethylene glycol bis(3-mercaptopropionate) is used.

### 3. Resin

The resin is a cured product of the polymerizable composition. In other words, the XDI composition is used as a raw material of the resin. Specifically, the resin is produced by reacting the above-described isocyanate component with the above-described active hydrogen group-containing component. When the active hydrogen group-containing component contains a polythiol, the resin has the excellent transparency. Therefore, the resin is preferable as an optical material. In other words, the XDI composition is preferably for optical use. In other words, the XDI composition is the raw material of the optical material.

A value of a yellow index (YI. value) of the resin is, for example, 1.10 or less, preferably 1.05 or less, more preferably 1.03 or less, more preferably 1.00 or less. When the YI. value is the above-described upper limit value or less, the hue is excellent.

The lower limit value of the YI. value of the resin is not limited. The Y.I. value of the resin is, for example, 0.95 or more.

A degree of devitrification of the resin is, for example, 18 or less, preferably 16 or less, more preferably 15 or less. When the degree of devitrification is the above-described upper limit value or less, the resin has the excellent transparency.

The lower limit value of the degree of devitrification of the resin is not limited. The degree of devitrification of the resin is, for example, 10 or more.

The resin is preferably molded by a known molding method. The resin is preferably cast-molded. In the cast-molding, an isocyanate component and an active hydrogen group-containing component are mixed at a ratio in which isocyanate groups in the isocyanate component with respect to active hydrogen groups (amino group, thiol group, or hydroxyl group) in the active hydrogen group-containing component are 0.8 to 1.2, and the obtained mixture is injected into a mold to be thereafter heated and cured. Thus, a molded article as a cast-molding product is obtained. In other words, the molded article is made of the resin. The molded article is preferable as an optical component. Examples of the molded article of the resin include optical elements.

Examples of the optical element include lenses, sheets, and films, and preferably, lenses are used.

The lens is produced, for example, by reaction of the XDI composition with the polythiol. For example, a casting method may be used in the production of the lens.

Examples of the lens include transparent lenses, sunglass lenses, polarized lenses, spectacle lenses, camera lenses, pick-up lenses, and contact lenses.

### <Function and Effect>

The resin, the molded article, the optical element, and the lens contain the cured product of the polymerizable composition. Therefore, the resin, the molded article, the optical element, and the lens have the excellent hue and the excellent transparency.

The XDI composition can be also used as a raw material of a coating agent (for example, paint and adhesive). In this case, the XDI composition is modified by a known method if necessary, and is contained as an isocyanate component in a polymerizable composition for coating.

A xylylene diisocyanate modified composition (hereinafter, referred to as an XDI modified composition) is produced by modifying the above-described XDI composition, and contains at least one kind of functional groups of the following (a) to (i):
(a) isocyanurate group
(b) allophanate group
(c) biuret group
(d) urethane group
(e) urea group
(f) iminooxadiazinedione group
(g) uretdione group
(h) uretonimine group
(i) carbodiimide group

More specifically, the XDI modified composition containing the functional group of the above-described (a) (isocyanurate group) contains a trimer of the XDI, and can be obtained, for example, by adding a known isocyanuration catalyst to an XDI monomer composition to be reacted, and subjecting the XDI to isocyanuration (for example, trimerization).

The XDI modified composition containing the functional group of the above-described (b) (allophanate group) contains an allophanate modified product of the XDI, and can be obtained, for example, by reacting the XDI monomer composition with a monohydric alcohol or a dihydric alcohol, and then, adding a known allophanatization catalyst to be further reacted.

The XDI modified composition containing the functional group of the above-described (c) (biuret group) contains a biuret modified product of the XDI, and can be obtained, for example, by reacting the XDI monomer composition with water or a secondary amine, and then, adding a known biuret-forming catalyst to be further reacted.

The XDI modified composition containing the functional group of the above-described (d) (urethane group) contains a polyol modified product of the XDI, and can be obtained, for example, by reaction of the XDI monomer composition with a low molecular weight polyol (for example, trimethylolpropane).

The XDI modified composition containing the functional group of the above-described (e) (urea group) contains a polyamine modified product of the XDI, and can be obtained, for example, by reaction of the XDI monomer composition with a polyamine.

The XDI modified composition containing the functional group of the above-described (f) (iminooxadiazinedione group) contains an iminooxadiazinedione modified product (asymmetric trimer) of the XDI, and can be obtained, for example, by reacting the XDI composition in the presence of a known iminooxadiazinedionization catalyst and subjecting the XDI to iminooxadiazinedionization (for example, trimerization).

The XDI modified composition containing the functional group of the above-described (g) (uretdione group) contains a uretdione modified product of the XDI, and can be obtained, for example, by a method of applying heat to the XDI composition at around 90°C to 200°C, or reacting the XDI composition in the presence of a known uretdionization catalyst and subjecting the XDI to uretdionization (for example, dimerization).

The XDI modified composition containing the functional group of the above-described (h) (uretonimine group) contains a uretonimine modified product of the XDI, and can be obtained, for example, by reacting the XDI composition in the presence of a known carbodiimidation catalyst to form a carbodiimide group, and then, adding the XDI to the carbodiimide group.

The XDI modified composition containing the functional group of the above-described (i) (carbodiimide group) contains a carbodiimide modified product of the XDI, and can be obtained, for example, by reacting the XDI composition in the presence of a known carbodiimidation catalyst.

The XDI modified composition may contain at least one kind of functional groups of the above-described (a) to (i), or may contain two or more kinds of them. Further, these XDI modified compositions may be used alone or in combination of two or more.

The polymerizable composition for coating is, for example, a two-component curable-type, and contains an A agent as a curing agent and a B agent as a main agent. The A agent contains the isocyanate component. The A agent preferably contains the XDI modified composition. The B agent contains the active hydrogen group-containing component. The B agent preferably contains the polyol.

### Examples

Next, the present invention is further described based on Examples below. The present invention is however not limited by these Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". All designations of "part" or "parts" and "%" mean part or parts by mass and % by mass, respectively, unless otherwise particularly specified.

### 1. Production of XDI Composition

The XDI composition was produced by the method described in International Patent Publication No. WO2018-190290.

Next, a predetermined amount of PTSI (manufactured by FUJIFILM Wako Pure Chemical Corporation) was mixed into the obtained XDI composition, and "Ratio of PTSI in XDI Composition" was adjusted to the ratio shown in Table 1.

Thus, each of the XDI compositions of Examples and Comparative Examples was obtained.

### 2. Production of Plastic Lens

As a curing catalyst, 0.01 parts by mass of dimethyltin dichloride, 0.10 parts by mass of ZELEC UN (trade name, manufactured by Stepan Company, acid phosphate ester), and 1.5 parts by mass of BioSorb 583 (manufactured by Sakai CHEMICAL CO., LTD., ultraviolet absorber) were mixed into 50.8 parts by mass of XDI composition shown in Table 1 at 20°C, and dissolved, thereby obtaining a liquid mixture 1.

Then, 49.2 parts by mass of polythiol composition containing 4,8-dimercaptomethyl-1,11-dimercapto-3,6,9-trithiaundecane, 4,7-dimercaptomethyl-1,11-dimercapto-3,6,9-trithiaundecane, and 5,7-dimercaptomethyl-1,11-dimercapto-3,6,9-trithiaundecane as a main component was uniformly mixed into the obtained liquid mixture 1, thereby obtaining a liquid mixture 2 (polymerizable composition).

The liquid mixture 2 was defoamed at 600 Pa for one hour, and thereafter, the defoamed product was filtered with a 1-µm Teflon (trademark) filter.

Next, the filtered liquid mixture 2 was injected into a mold consisting of a glass mold and a tape.

Next, the mold into which the liquid mixture 2 was injected was put into an oven, and the temperature thereof was increased from 25°C to 120°C to be cured at 120°C for 24 hours.

Thereafter, the mold was taken out from the oven, and a cured product was released from the mold. The obtained cured product was annealed at 120°C for one hour.

As described above, each of the cured products (molded article) of Examples and Comparative Examples was obtained.

### 3. Measurement Method

### (1) Value of Yellow Index (Y.I. Value)

Each of the cured products of Examples and Comparative Examples was molded into a plastic lens (optical element) having a disc shape (thickness of 9 mm, diameter of 75 mm).

The Y.I. value of the permeation of the obtained plastic lens was measured using a spectrophotometric colorimeter CM-5 (manufactured by KONICA MINOLTA, INC.).

The smaller the Y.I. value, the better the hue of the plastic lens, and the larger the Y.I. value, the poorer the hue. The results are shown in Table 1.

### (2) Degree of Devitrification

Each of the cured products of Examples and Comparative Examples was molded into a plastic lens (optical element) having a disc shape (thickness of 9 mm, diameter of 75 mm).

Next, light from a light source (Luminar Ace LA-150A, manufactured by HAYASHI-REPIC CO., LTD.) was transmitted through the lens.

An image of the light transmitting through the disc-shaped lens was taken into an image processing device (manufactured by Ube Information Systems, Inc.), and the taken image was subjected to a shading process.

A degree of shading of the processed image was quantified for each pixel, and an average value of the numerical value of the degree of shading of each pixel was calculated. The obtained average value is the degree of devitrification of the lens. The smaller the degree of devitrification, the more excellent the transparency of the lens. The results are shown in Table 1.

**[Table 1]**

| | PTSI Amount in XDI [ppm] | YI | Degree of Devitrification |
|---|---|---|---|
| Ex. 1 | 20 | 0.99 | 15 |
| Reference Ex. 2 | 823.8 | 1.00 | 15 |
| Reference Ex. 3 | 1923.7 | 0.99 | 15 |
| Reference Ex. 4 | 3860.5 | 0.99 | 15 |
| Reference Ex. 5 | 7789.9 | 1.00 | 15 |
| Reference Ex. 6 | 12127.0 | 1.03 | 15 |
| Reference Ex. 7 | 23907.0 | 1.09 | 17 |
| Comparative Ex. 1 | 0 | 1.07 | 19 |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The xylylene diisocyanate composition, the xylylene diisocyanate modified composition, the polymerizable composition, the resin, and the molded article of the present invention are used for optical elements such as lenses, sheets, and films.

## Claims

1. A xylylene diisocyanate composition for optical use comprising:
a xylylene diisocyanate and a 4-methylbenzenesulfonyl isocyanate, wherein
a ratio of the 4-methylbenzenesulfonyl isocyanate in the xylylene diisocyanate composition is, on a mass basis, 100 ppm or less.

2. The xylylene diisocyanate composition for optical use according to claim 1, wherein
a ratio of the 4-methylbenzenesulfonyl isocyanate in the xylylene diisocyanate composition is, on a mass basis, 1 ppm or more.

3. The xylylene diisocyanate composition for optical use according to claim 1, wherein
a ratio of the 4-methybenzenesulfonyl isocyanate in the xylylene diisocyanate composition is, on a mass basis, 20 ppm or more.

4. A polymerizable composition comprising:
the xylylene diisocyanate composition for optical use according to claim 1 and
an active hydrogen group-containing component.

5. The polymerizable composition according to claim 4, wherein
the active hydrogen group-containing component contains a polythiol.

6. The polymerizable composition according to claim 5, wherein
the polythiol is at least one kind selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).

7. A resin being a cured product of the polymerizable composition according to claim 4.

8. A molded article made of the resin according to claim 7.

9. An optical element being the molded article according to claim 8.

10. A lens being the optical element according to claim 9.

## Patentansprüche

1. Xylylendiisocyanat-Zusammensetzung zur optischen Verwendung, die Folgendes umfasst:
ein Xylylendiisocyanat und ein 4-Methylbenzolsulfonylisocyanat, wobei der Anteil des 4-Methylbenzolsulfonylisocyanats in der Xylylendiisocyanat-Zusammensetzung, bezogen auf die Masse, 100 ppm oder weniger beträgt.

2. Xylylendiisocyanat-Zusammensetzung zur optischen Verwendung nach Anspruch 1, wobei der Anteil des 4-Methylbenzolsulfonylisocyanats in der Xylylendiisocyanat-Zusammensetzung, bezogen auf die Masse, 1 ppm oder mehr beträgt.

3. Xylylendiisocyanat-Zusammensetzung zur optischen Verwendung nach Anspruch 1, wobei der Anteil des 4-Methylbenzolsulfonylisocyanats in der Xylylendiisocyanat-Zusammensetzung, bezogen auf die Masse, 20 ppm oder mehr beträgt.

4. Polymerisierbare Zusammensetzung, die Folgendes umfasst:
eine Xylylendiisocyanat-Zusammensetzung zur optischen Verwendung nach Anspruch 1 und eine aktive Wasserstoff-Gruppen enthaltende Komponente.

5. Polymerisierbare Zusammensetzung nach Anspruch 4, wobei die aktive Wasserstoff-Gruppen enthaltende Komponente ein Polythiol enthält.

6. Polymerisierbare Zusammensetzung nach Anspruch 5, wobei
das Polythiol zumindest eine Art, ausgewählt aus der aus 5,7-Dimercaptomethyl-1,11-dimercapto-3,6,9-trithiaundecan, 4,7-Dimercaptomethyl-1,11-dimercapto-3,6,9-trithia-undecan, 4,8-Dimercaptomethyl-1,11-dimercapto-3,6,9-trithiaundecan, 4-Mercaptomethyl-1,8-dimercapto-3,6-dithiaoctan, Pentaerythrittetrakis(2-mercaptoacetat), Pentaerythrit-tetrakis(3-mercaptopropionat), 2,5-Bis(mercaptomethyl)-1,4-dithian, Bis(mercaptoethyl)sulfid, 1,1,3,3-Tetrakis(mercaptomethylthio)propan, 4,6-Bis(mercaptomethylthio)-1,3-dithian, 2-(2,2-Bis(mercaptomethylthio)ethyl)-1,3-dithiethan, 1,1,2,2-Tetrakis(mercaptomethylthio)-ethan, 3-Mercaptomethyl-1,5-dimercapto-2,4-dithiapentan, Tris(mercaptomethylthio)methan und Ethylenglykol-bis(3-mercaptopropionat) bestehenden Gruppe ist.

7. Harz, das ein gehärtetes Produkt einer polymerisierbaren Zusammensetzung nach Anspruch 4 ist.

8. Formteil, das aus einem Harz nach Anspruch 7 besteht.

9. Optisches Element, das ein Formteil nach Anspruch 8 ist.

10. Linse, die ein optisches Element nach Anspruch 9 ist.

## Revendications

1. Composition de diisocyanate de xylylène à usage optique, comprenant :
un diisocyanate de xylylène et un isocyanate de 4-méthylbenzènesulfonyle, dans laquelle
un rapport de l'isocyanate de 4-méthylbenzènesulfonyle dans la composition de diisocyanate de xylylène est, en masse, de 100 ppm ou moins.

2. Composition de diisocyanate de xylylène à usage optique selon la revendication 1, dans laquelle
un rapport de l'isocyanate de 4-méthylbenzènesulfonyle dans la composition de diisocyanate de xylylène est, en masse, de 1 ppm ou plus.

3. Composition de diisocyanate de xylylène à usage optique selon la revendication 1, dans laquelle
un rapport de l'isocyanate de 4-méthybenzènesulfonyle dans la composition de diisocyanate de xylylène est, en masse, de 20 ppm ou plus.

4. Composition polymérisable, comprenant :
la composition de diisocyanate de xylylène à usage optique selon la revendication 1, et
un composant contenant un groupe hydrogène actif.

5. Composition polymérisable selon la revendication 4, dans laquelle
le composant contenant un groupe hydrogène actif contient un polythiol.

6. Composition polymérisable selon la revendication 5, dans laquelle
le polythiol est au moins un type choisi dans le groupe constitué de 5,7-dimercaptométhyl-1,11-dimercapto-3,6,9-trithiaundécane, 4,7-dimercaptométhyl-1,11-dimercapto-3,6,9-trithiaundécane, 4,8-dimercaptométhyl-1,11-dimercapto-3,6,9-trithiaundécane, 4-mercaptométhyl-1,8-dimercapto-3,6-dithiaoctane, tétrakis(2-mercaptoacétate) de pentaérythritol, tétrakis(3-mercaptopropionate) de pentaérythritol, 2,5-bis(mercaptométhyl)-1,4-dithiane, bis(mercaptométhyl)sulfure, 1,1,3,3-tétrakis(mercaptométhylthio)propane, 4,6-bis(mercaptométhylthio)-1,3-dithiane, 2-(2,2-bis(mercaptométhylthio)éthyl)-1,3-dithiéthane, 1,1,2-tétrakis(mercaptométhylthio)éthane, 3-mercaptométhyl-1,5-diméthto-2,4-dithiaptane, tris(mercaptométhylthio)méthane et bis(3-mercaptopropionate) d'éthylène glycol.

7. Résine étant un produit durci de la composition polymérisable selon la revendication 4.

8. Article moulé réalisé en la résine selon la revendication 7.

9. Élément optique étant l'article moulé selon la revendication 8.

10. Lentille étant l'élément optique selon la revendication 9.
